# EUROPÄISCHE PATENTSCHRIFT

(11) **EP 3 365 579 B1**
(45) Veröffentlichungstag und Bekanntmachung des Hinweises auf die Patenterteilung: **18.12.2019**
(21) Anmeldenummer: 16798398.0
(22) Anmeldetag: 20.10.2016
(51) Int. Cl.: F16F 15/131, F16D 13/54, F16D 13/56, F16F 15/14

(54) **DREHSCHWINGUNGSDÄMPFER UND HYBRID-ANTRIEBSSTRANG**
TORSIONAL VIBRATION DAMPER AND HYBRID DRIVE TRAIN
AMORTISSEUR DE VIBRATIONS DE TORSION ET GROUPE PROPULSEUR HYBRIDE

(30) Priorität: 22.10.2015 DE 102015220598
(43) Veröffentlichungstag der Anmeldung: 29.08.2018
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2016/200483
(87) Internationale Veröffentlichungsnummer: WO 2017/067554

(56) Entgegenhaltungen:
- EP-A2- 2 600 030
- DE-A1-102010 018 193
- DE-A1-102011 081 162
- DE-A1-102013 201 269
- DE-A1-102014 203 954
- DE-A1-102014 212 790

## Beschreibung

Die Erfindung betrifft einen Drehschwingungsdämpfer, insbesondere Zweimassenschwungrad, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind, und eine zwischen dem Eingangsteil und dem Ausgangsteil wirksame Feder-Dämpfer-Einrichtung, wobei das Ausgangsteil eine zwischen einer offenen Betätigungsstellung und einer geschlossenen Betätigungsstellung verstellbare Kupplungseinrichtung mit einer Eingangsseite und einer Ausgangsseite aufweist, wobei die Kupplungseinrichtung in der geschlossenen Betätigungsstellung ein Drehmoment von der Eingangsseite auf die Ausgangsseite überträgt. Außerdem betrifft die Erfindung einen Hybrid-Antriebsstrang mit einer Brennkraftmaschine und einer elektrischen Maschine.

Aus der DE 10 2014 203 954 A1 ist eine Kupplungseinrichtung bekannt, umfassend eine Eingangsseite und eine Ausgangsseite, die drehbar um eine Drehachse angeordnet sind, sowie wenigstens einen ersten Reibpartner und wenigstens einen zweiten Reibpartner, wobei der erster Reibpartner drehmomentschlüssig mit der Eingangsseite verbunden ist und der zweite Reibpartner drehmomentschlüssig mit der Ausgangsseite verbunden ist, der erste und der zweite Reibpartner durch eine Anpresskraft in Reibeingriff bringbar sind, um ein Drehmoment zwischen der Eingangsseite und der Ausgangsseite zu übertragen, wobei wenigstens ein Federmittel vorgesehen ist, das ausgebildet ist, die Anpresskraft zu verstärken. Auf diese Weise wird gewährleistet, dass die Anpresskraft zum Anpressen der beiden Reibpartner erhöht wird. An der Kupplungseinrichtung kann ein Drehschwingungsdämpfer angebracht sein. Die Kupplungseinrichtung kann eine Hybridkupplung sein.

Aus jeder der EP 2 600 030 A2, der DE 10 2013 201 269 A1 und der DE 10 2011 081 162 A1 ist ein Drehschwingungsdämpfer bekannt, der ein Eingangsteil und ein Ausgangsteil mit einer gemeinsamen Drehachse, um die das Eingangsteil und das Ausgangsteil zusammen drehbar und relativ zueinander begrenzt verdrehbar sind, und eine zwischen dem Eingangsteil und dem Ausgangsteil wirksame Feder-Dämpfer-Einrichtung aufweist. Das Ausgangsteil weist eine zwischen einer offenen Betätigungsstellung und einer geschlossenen Betätigungsstellung verstellbare Kupplungseinrichtung mit einer Eingangsseite und einer Ausgangsseite auf. Die Kupplungseinrichtung überträgt in der geschlossenen Betätigungsstellung ein Drehmoment von der Eingangsseite auf die Ausgangsseite. Die Ausgangsseite der Kupplungseinrichtung weist eine Federanordnung auf, die in der geschlossenen Betätigungsstellung der Kupplungseinrichtung das Drehmoment von einem ersten Bauteil der Ausgangsseite auf ein zweites Bauteil der Ausgangsseite überträgt.

Aus der DE 10 2014 212 790 A1 ist ein Drehschwingungsdämpfer bekannt, der ein Eingangsteil und ein Ausgangsteil mit einer gemeinsamen Drehachse, um die das Eingangsteil und das Ausgangsteil zusammen drehbar und relativ zueinander begrenzt verdrehbar sind, und eine zwischen dem Eingangsteil und dem Ausgangsteil wirksame Feder-Dämpfer-Einrichtung aufweist. Das Ausgangsteil weist eine zwischen einer offenen Betätigungsstellung und einer geschlossenen Betätigungsstellung verstellbare Kupplungseinrichtung mit einer Eingangsseite und einer Ausgangsseite auf. Die Kupplungseinrichtung überträgt in der geschlossenen Betätigungsstellung ein Drehmoment von der Eingangsseite auf die Ausgangsseite.

Aus der nicht vorveröffentlichten DE 10 2016 206 854 A1 ist ein Drehschwingungsdämpfer, insbesondere Zweimassenschwungrad, bekannt, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung, wobei das Ausgangsteil eine zwischen einer offenen Betätigungsstellung und einer geschlossenen Betätigungsstellung verstellbare Kupplungseinrichtung mit einer Betätigungseinrichtung zum Öffnen und Schließen der Kupplungseinrichtung aufweist. Ein Hybrid-Antriebsstrang mit einer Brennkraftmaschine und einer elektrischen Maschine mit einem Stator und einem Rotor kann einen solchen Drehschwingungsdämpfer aufweisen.

Aus der DE 10 2010 018 193 A1 ist einen Hybrid-Antriebsstrang mit einer Brennkraftmaschine, einer elektrischen Maschine und einem Drehschwingungsdämpfer bekannt. Dieser Hybrid-Antriebsstrang offenbart den Oberbegriff des Anspruchs 1.

Der Erfindung liegt die Aufgabe zugrunde, einen eingangs genannten Hybrid-Antriebsstrang baulich und/oder funktional zu verbessern. Insbesondere soll ein Bauraumbedarf der Kupplungseinrichtung reduziert sein. Insbesondere soll ein Herstellungsaufwand reduziert sein. Insbesondere soll eine ausgangsteilintegrierte Kupplungseinrichtung bereitgestellt werden, die es ermöglicht, eine Brennkraftmaschine mit einem Antriebsstrang zu verbinden bzw. von dem Antriebsstrang zu trennen. Insbesondere soll eine ausgangsteilintegrierte Kupplungseinrichtung in ein Zweimassenschwungrad integriert werden. Insbesondere soll mithilfe der Kupplungseinrichtung innerhalb kürzester Zeit die Brennkraftmaschine an den Antriebsstrang koppelbar und ein Moment der Brennkraftmaschine übertragbar sein.

Die Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Ein erstes Bauteil kann ein Innenkorb der Ausgangsseite der Kupplungseinrichtung sein. Ein zweites Bauteil kann ein Kupplungsträger der Ausgangsseite der Kupplungseinrichtung sein.

Die Kupplungseinrichtung ist eine Hybridtrennkupplung. Die Kupplungseinrichtung ist eine sogenannte K0-Kupplung eines Hybrid-Antriebsstrangs. Die Kupplungseinrichtung kann eine Lamellenkupplung aufweisen. In der geschlossenen Betätigungsstellung der Kupplungseinrichtung kann die Federanordnung wenigstens mittelbar ein Lamellenpaket der Kupplungseinrichtung derart spannen, dass mittels des Lamellenpakets das Drehmoment von der Eingangsseite auf die Ausgangsseite übertragbar ist. Dadurch hat die Federanordnung zwei Funktionen. Zum einen überträgt die Federanordnung das Drehmoment von einem ersten Bauteil der Ausgangsseite auf ein zweites Bauteil der Ausgangsseite. Zum anderen spannt die Federanordnung die Kupplungsvorrichtung, so dass das Drehmoment von der Eingangsseite auf die Ausgangsseite übertragbar ist. Durch diese Funktionsintegration ist der Bauraumbedarf für den Drehschwingungsdämpfer reduziert.

Ein Außenkorb der Kupplungseinrichtung kann in das Ausgangsteil integriert sein. Ein Außenkorb der Kupplungseinrichtung kann in einen Abtriebsflansch des Ausgangsteils integriert sein. Ein Innenkorb der Kupplungseinrichtung kann in axialer Richtung begrenzt verlagerbar sein. Ein Innenkorb der Kupplungseinrichtung kann mittels der Federanordnung drehfest mit einem Kupplungsträger verbunden sein.

Die Kupplungseinrichtung kann eine Federanordnung aufweisen. Die Federanordnung kann die Kupplungseinrichtung in die geschlossene Betätigungsstellung beaufschlagen. Die Federanordnung kann Blattfedern aufweisen. Die Federanordnung kann wenigstens ein Blattfederpaket aufweisen. Die Federanordnung kann drei Blattfederpakete aufweisen. Die Blattfederpakete können gleichmäßig über den Umfang des Drehschwingungsdämpfers verteilt angeordnet sein. Die Blattfedern können einen Aufstellwinkel aufweisen, wodurch das übertragbare Moment der Kupplungseinrichtung im Zugbetrieb verstärkt wird.

Der Drehschwingungsdämpfer kann zur Anordnung in einem Kraftfahrzeug dienen. Der Drehschwingungsdämpfer ist in einem Hybrid-Antriebsstrang angeordnet. Der Drehschwingungsdämpfer kann dazu dienen, Drehschwingungen zu reduzieren, die durch periodische Vorgänge angeregt werden. Der Drehschwingungsdämpfer kann dazu dienen, Drehschwingungen zu reduzieren, die durch eine Brennkraftmaschine angeregt werden. Die Bezeichnungen "Eingangsteil" und "Ausgangsteil" können auf eine von einer Brennkraftmaschine ausgehende Leitungsflussrichtung bezogen sein.

Die Feder-Dämpfer-Einrichtung kann eine Federeinrichtung aufweisen. Die Federeinrichtung kann wenigstens einen Energiespeicher aufweisen. Der wenigstens eine Energiespeicher kann sich einerseits an dem Eingangsteil und andererseits an dem Ausgangsteil abstützen. Der wenigstens eine Energiespeicher kann eine Schraubenfeder sein. Der wenigstens eine Energiespeicher kann eine Druckfeder sein. Der wenigstens eine Energiespeicher kann eine Bogenfeder sein. Die Feder-Dämpfer-Einrichtung kann eine Reibeinrichtung aufweisen. Das Eingangsteil kann zur Antriebsverbindung mit einer Brennkraftmaschine dienen. Das Ausgangsteil kann zu einer fahrzeugradseitigen Antriebsverbindung dienen.

Das Eingangsteil kann einen Flanschabschnitt aufweisen. Das Eingangsteil kann einen Deckelabschnitt aufweisen. Der Flanschabschnitt und der Deckelabschnitt können einen Aufnahmeraum für den wenigstens einen Energiespeicher begrenzen. Der Aufnahmeraum kann eine torusartige Form aufweisen. Das Eingangsteil kann in den Aufnahmeraum ragende Abstützabschnitte für den wenigstens einen Energiespeicher aufweisen. Das Ausgangsteil kann ein Flanschteil aufweisen. Das Flanschteil kann axial zwischen dem Flanschabschnitt und dem Deckelabschnitt angeordnet sein. Das Flanschteil kann nach radial außen ragende Fortsätze aufweisen. Die Fortsätze können in den Aufnahmeraum ragen. Die Fortsätze können als ausgangsteilseitige Abstützabschnitte für den wenigstens einen Energiespeicher dienen. Der Drehschwingungsdämpfer kann eine Lagereinrichtung zur gegenseitigen verdrehbaren Lagerung des Eingangsteils und des Ausgangsteils aufweisen. Die Lagereinrichtung kann ein Gleitlager aufweisen Die Lagereinrichtung kann ein Wälzlager, insbesondere ein Kugellager, aufweisen.

Das Ausgangsteil kann einen topfartigen Abschnitt aufweisen. Der topfartige Abschnitt kann einen Innenraum aufweisen. Die Kupplungseinrichtung kann zumindest annähernd vollständig in dem Innenraum angeordnet sein. Die Kupplungseinrichtung kann in das Ausgangsteil integriert sein. Die Kupplungseinrichtung kann radial zumindest im Wesentlichen innerhalb des Innenraums angeordnet sein. Eine radiale Richtung ist eine zur Drehachse senkrechte Richtung. Die Kupplungseinrichtung mit der Betätigungseinrichtung kann axial zumindest im Wesentlichen innerhalb des Innenraums angeordnet ist. Eine axiale Richtung ist eine Erstreckungsrichtung der Drehachse.

Der topfartige Abschnitt und das Flanschteil des Ausgangsteils können miteinander fest verbunden, insbesondere vernietet, sein. Der topfartige Abschnitt kann einen Bodenabschnitt, einen Wandabschnitt und eine Öffnungsseite aufweisen. Der topfartige Abschnitt kann mit seinem Bodenabschnitt mit dem Flanschteil verbunden sein. Der Innenraum kann von dem Bodenabschnitt und dem Wandabschnitt begrenzt sein. Der topfartige Abschnitt kann ein Gehäuse für die Kupplungseinrichtung bilden. Der topfartige Abschnitt kann einen Außenkorb der Kupplungseinrichtung bilden. Der Drehschwingungsdämpfer kann ein Nabenteil aufweisen. Das Nabenteil kann dazu dienen, den Drehschwingungsdämpfer ausgangsseitig mit einem Antriebsstrang zu verbinden. Das Nabenteil kann drehfest mit einer Ausgangswelle verbindbar sein. Das Nabenteil kann drehfest mit einer Getriebeeingangswelle verbindbar sein. Eine Ausgangsseite kann eine zu einem Fahrzeugrad hin gerichtete Seite sein. Eine Ausgangsseite kann eine zu einer elektrischen Maschine sowie einem Getriebe eines Hybrid-Antriebsstrangs hin gerichtete Seite sein.

Die Kupplungseinrichtung kann eine Lamellenkupplung aufweisen. Die Lamellenkupplung kann eine trockene Lamellenkupplung sein. Die Kupplungseinrichtung kann erste Lamellen, insbesondere Reiblamellen, aufweisen. Die Kupplungseinrichtung kann einen Außenkorb aufweisen. Die ersten Lamellen können mit dem Außenkorb drehfest verbunden sein. Die Kupplungseinrichtung kann zweite Lamellen, insbesondere Reiblamellen, aufweisen. Die Kupplungseinrichtung kann einen Innenkorb aufweisen. Die zweiten Lamellen können mit dem Innenkorb drehfest verbunden sein. Die ersten Lamellen und die zweiten Lamellen können abwechselnd angeordnet sein. Die ersten Lamellen und/oder die zweiten Lamellen können Reibbeläge aufweisen. Die Kupplungseinrichtung kann eine Druckplatte aufweisen. Ein Bodenabschnitt des Innenkorbs kann als Druckplatte dienen. Die Druckplatte kann mit dem Innenkorb verbunden sein. Die Druckplatte kann einteilig mit dem Innenkorb ausgeführt sein. Die Druckplatte kann ringscheibenförmig sein. Die Druckplatte kann in radialer Richtung von einem weitgehend zylindrischen Abschnitt des Innenkorbs abstehen. Die Kupplungseinrichtung kann eine Anpressplatte aufweisen. Die Druckplatte kann relativ zu der Anpressplatte axial begrenzt verlagerbar sein. Die ersten Lamellen und die zweiten Lamellen können zwischen der Druckplatte und der Anpressplatte zur reibschlüssigen Übertragung einer mechanischen Leistung einklemmbar sein.

Die Kupplungseinrichtung kann eine Eingangsseite mit einem Kupplungseingangsteil und eine Ausgangsseite mit einem Kupplungsausgangsteil aufweisen. Der topfartige Abschnitt des Ausgangsteils des Drehschwingungsdämpfers, der Außenkorb, die Druckplatte, die ersten Lamellen und/oder die Anpressplatte können zu dem Kupplungseingangsteil gehören. Die zweiten Lamellen, der Innenkorb und/oder die Ausgangswelle des Drehschwingungsdämpfers können zu dem Kupplungsausgangsteil gehören.

Die Kupplungseinrichtung kann ausgehend von einer vollständig ausgerückten Betätigungsstellung, in der zwischen dem Kupplungseingangsteil und dem Kupplungsausgangsteil im Wesentlichen keine Leistungsübertragung erfolgt, bis hin zu einer vollständig eingerückten Betätigungsstellung, in der zwischen dem Kupplungseingangsteil und dem Kupplungsausgangsteil im Wesentlichen eine vollständige Leistungsübertragung erfolgt, betätigungsabhängig eine zunehmende Leistungsübertragung ermöglichen, wobei eine Leistungsübertragung zwischen dem Kupplungseingangsteil und dem Kupplungsausgangsteil kraftschlüssig, insbesondere reibschlüssig, erfolgen kann. Umgekehrt kann ausgehend von einer vollständig eingerückten Betätigungsstellung, in der zwischen dem Kupplungseingangsteil und dem Kupplungsausgangsteil im Wesentlichen eine vollständige Leistungsübertragung erfolgt, bis hin zu einer vollständig ausgerückten Betätigungsstellung, in der zwischen dem Kupplungseingangsteil und dem Kupplungsausgangsteil im Wesentlichen keine Leistungsübertragung erfolgt, betätigungsabhängig eine abnehmende Leistungsübertragung ermöglicht sein. Eine vollständig eingerückte Betätigungsstellung kann die geschlossene Betätigungsstellung sein. Eine vollständig ausgerückte Betätigungsstellung kann die offene Betätigungsstellung sein. Die Kupplungseinrichtung kann mittels eines Drucktopfes in die offene Betätigungsstellung ausrückbar sein. Mithilfe eines Drucktopfes kann die Druckplatte der Kupplungseinrichtung axial verlagerbar sein. Mithilfe des Drucktopfes kann die Kupplungseinrichtung geöffnet werden. Mithilfe des Drucktopfes kann die Kupplungseinrichtung ausgerückt werden.

Der Drehschwingungsdämpfer kann eine Fliehkraftpendeleinrichtung aufweisen. Die Fliehkraftpendeleinrichtung kann dazu dienen, Drehschwingungen zu tilgen. Wenigstens eine Pendelmasse kann beispielsweise über die Zündfrequenz eines Verbrennungsmotors zum Schwingen angeregt werden. Aufgrund des Massenträgheitsmoments kann sich die wenigstens eine Pendelmasse entgegen einer anregenden Schwingung bewegen und als Schwingungstilger fungieren. Drehschwingungen bei hohen Drehmomenten und geringen Motordrehzahlen lassen sich besonders effektiv durch eine Fliehkraftpendeleinrichtung tilgen.

Die wenigstens eine Pendelmasse kann zur Drehachse exzentrisch angeordnet sein. Die wenigstens eine Pendelmasse kann zwischen einer ersten Endlage und einer zweiten Endlage verlagerbar sein. Die wenigstens eine Pendelmasse kann eine bogenartige Form aufweisen. Die wenigstens eine Pendelmasse kann mit einem Pendelmasseträgerteil bifilar verbunden sein. Die wenigstens eine Pendelmasse kann an dem Pendelmasseträgerteil mithilfe von Pendelrollen gelagert sein. Das Pendelmasseträgerteil kann Aufnahmen zur Aufnahme der wenigstens einen Pendelrolle aufweisen. Die wenigstens eine Pendelmasse kann Öffnungen zur Aufnahme der wenigstens einen Pendelrollen aufweisen. Die Öffnungen der wenigstens einen Pendelmasse und/oder die Aufnahmen des Pendelmasseträgerteils können jeweils eine nierenartige Form aufweisen. Die Fliehkraftpendeleinrichtung kann mehrere, beispielsweise vier, Pendelmassen aufweisen. Es können mehrere Pendelmassen und Pendelrollen über einen Umfang der Fliehkraftpendeleinrichtung verteilt angeordnet sein. Es können mehrere Pendelmassen und Pendelrollen äquidistant über den Umfang der Fliehkraftpendeleinrichtung verteilt angeordnet sein.

Die Fliehkraftpendeleinrichtung kann an dem Ausgangsteil des Drehschwingungsdämpfers angeordnet sein. Die Fliehkraftpendeleinrichtung kann an dem Ausgangsteil des Drehschwingungsdämpfers befestigt sein. Die Fliehkraftpendeleinrichtung kann mit dem Ausgangsteil des Drehschwingungsdämpfers verbunden sein. Ein Lamellenpaket einer Kupplungseinrichtung kann in radialer Richtung innerhalb der Fliehkraftpendeleinrichtung angeordnet sein. Das Lamellenpaket kann in axialer Richtung mit der Fliehkraftpendeleinrichtung überlappen. Die Kupplungseinrichtung kann in radialer Richtung innerhalb eines Pendelmasseträgerteils der Fliehkraftpendeleinrichtung angeordnet sein. Die Kupplungseinrichtung kann in axialer Richtung mit dem Pendelmasseträgerteils der Fliehkraftpendeleinrichtung überlappend angeordnet sein.

Eine elektrische Maschine weist einen Stator und einen Rotor auf.

Der Antriebsstrang kann ein Kraftfahrzeug-Antriebsstrang sein. Der Antriebsstrang kann eine Anfahreinrichtung aufweisen. Der Antriebsstrang kann eine Reibungskupplungseinrichtung aufweisen. Der Antriebsstrang kann einen hydrodynamischen Drehmomentwandler aufweisen. Der Antriebsstrang kann eine Getriebeeinrichtung aufweisen. Der Antriebsstrang kann wenigstens ein antreibbares Fahrzeugrad aufweisen.

Der Drehschwingungsdämpfer kann zwischen der Brennkraftmaschine einerseits und der elektrischen Maschine sowie dem wenigstens einen antreibbaren Fahrzeugrad andererseits angeordnet sein. Die Anfahreinrichtung, die Reibungskupplungseinrichtung, der hydrodynamische Drehmomentwandler und/oder die Getriebeeinrichtung können/kann zwischen dem Drehschwingungsdämpfer und dem wenigstens einen antreibbaren Fahrzeugrad angeordnet sein.

Die Brennkraftmaschine kann mit dem Eingangsteil des Drehschwingungsdämpfers verbunden sein. Ein Rotor der elektrischen Maschine kann mittels einer Ausgangswelle mit dem Drehschwingungsdämpfer verbunden sein. Die elektrische Maschine kann als Motor und/oder als Generator betreibbar sein.

Zusammenfassend und mit anderen Worten dargestellt ergibt sich somit durch die Erfindung unter anderem eine Blattfederkupplung als Trennkupplung für Hybridfahrzeuge. Die Erfindung betrifft eine Trennkupplung zwischen einem Verbrennungsmotor und einer E-Maschine. Die Kupplung ist in einen Drehschwingungsdämpfer, insbesondere ein Zweimassenschwungrad, integriert und benötigt wenig Bauraum. Zum Starten des Verbrennungsmotors ist vorzugsweise ein konventioneller Starter bzw. ein Riemenstarter vorhanden. Nach dem Start des Verbrennungsmotors werden die Drehzahlen von E-Maschine und Verbrennungsmotor synchronisiert und anschließend die Trennkupplung geschlossen. Im Zugbetrieb muss die Trennkupplung das Motormoment mit einer gewissen Sicherheit übertragen können, im Schubbetrieb ist lediglich die Übertragung des Verbrennungsmotor-Schleppmoments (Motorbremse) erforderlich. Die Trennkupplung ist als trockene Mehrscheibenkupplung (normally closed) ausgeführt. Ein Außenkorb der Kupplung, in den die Reiblamellen eingreifen, ist im Zweimassenschwungrad integriert. Stahllamellen sind über eine Innenverzahnung mit einem Innenkorb verbunden. Der Innenkorb ist im Vergleich zu einer konventionellen Kupplung nicht direkt über eine Nabe mit einer Getriebeeingangswelle verbunden, sondern zweiteilig ausgeführt. Die Momentenübertragung zwischen dem Innenkorb und der Nabe erfolgt über die Blattfedern, die zudem die Anpresskraft der Kupplung erzeugen. Die Blattfedern weisen einen gewissen Aufstellwinkel auf, wodurch das Moment im Zugbetrieb verstärkt wird. Die Verstärkungskraft wird dabei intern zwischen einer Anpressplatte und dem Innenkorb abgestützt. Im Schubbetrieb wird das übertragbare Moment etwas reduziert. Zum Trennen der Kupplung wird diese über einen Drucktopf ausgerückt, so dass sich die Lamellen frei drehen können.

Vorzugsweise ist die Trennkupplung eine trockene Lamellen-Trennkupplung für einen hybriden Antriebsstrang, die ausgebildet ist, einen Verbrennungsmotor und ein an dem Verbrennungsmotor angeflanschtes Zweimassenschwungrad vom restlichen Antriebsstrang, das heißt vom elektrischen Fahrmotor und dem Gangwechselgetriebe abzukoppeln bzw. zum restlichen Antriebsstrang zuzuschalten (K0-Kupplung). Die Lamellen-Trennkupplung ist in den Abtriebsflansch des Zweimassenschwungrads integriert, wobei das Zweimassenschwungrad vorzugsweise mit einem Fliehkraftpendel versehen ist, mit dem sich die Lamellen-Trennkupplung in axialer Richtung überlappt. Vorzugsweise ist die Lamellen-Trennkupplung in radialer Richtung innerhalb des Fliehkraftpendels angeordnet. Vorteilhafterweise ist ein Außenkorb der Lamellen-Trennkupplung in den Abtriebsflansch des Zweimassenschwungrads integriert. Ein Innenkorb der Lamellen-Trennkupplung kann in axialer Richtung begrenzt verlagerbar und über Blattfedern drehfest mit einem Kupplungsträger verbunden sein, der über eine Steckverzahnung drehfest und in axialer Richtung ortsfest durch einen Sicherungsring mit der Nabe einer Getriebeeingangswelle (und dem ebenfalls dort angeordneten elektrischen Fahrmotor) verbunden ist. Die Blattfedern sind vorzugsweise derart angeordnet, dass die Lamellen-Trennkupplung als normal-eingerückte Kupplung ausgebildet ist, wobei die Blattfedern vorzugsweise im Momentenfluss der Kupplung angeordnet sind, das heißt im Zugbetrieb des Verbrennungsmotors das durch die Lamellen-Trennkupplung übertragbare Drehmoment erhöhen. Ein Drucktopf, auf den ein Ausrücksystem wirkt, kann ebenfalls an den Innenkorb angebunden sein, vorzugsweise über dieselben Befestigungsmittel, über die auch die Blattfedern am Innenkorb angebunden sind.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung ist der Bauraumbedarf der Kupplungseinrichtung reduziert. Insbesondere ist ein Herstellungsaufwand reduziert. Insbesondere ist eine ausgangsteilintegrierte Kupplungseinrichtung bereitgestellt, die es ermöglicht, eine Brennkraftmaschine mit einem Antriebsstrang zu verbinden bzw. von dem Antriebsstrang zu trennen. Insbesondere ist eine ausgangsteilintegrierte Kupplungseinrichtung in ein Zweimassenschwungrad integriert. Insbesondere ist mithilfe der Kupplungseinrichtung innerhalb kürzester Zeit die Brennkraftmaschine an den Antriebsstrang koppelbar und ein Moment der Brennkraftmaschine übertragbar.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale des Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einem in dem Antriebsstrang angeordneten Drehschwingungsdämpfer mit einer Kupplungseinrichtung,
- Fig. 2: einen Schnitt durch ein Ausführungsbeispiel eines Drehschwingungsdämpfers mit integrierter Hybridtrennkupplung,
- Fig. 3: eine perspektivische Schnittansicht des Drehschwingungsdämpfers aus Fig. 2,
- Fig. 4: eine perspektivische Schnittansicht des Drehschwingungsdämpfers aus Fig. 2, wobei ein Eingangsteil und eine Fliehkraftpendeleinrichtung nicht dargestellt sind,
- Fig. 5: eine perspektivische Schnittansicht der Hybridtrennkupplung des Drehschwingungsdämpfers aus Fig. 2,
- Fig. 6: eine perspektivische Ansicht der Hybridtrennkupplung des Drehschwingungsdämpfers aus Fig. 2,
- Fig. 7: eine Seitenansicht der Hybridtrennkupplung des Drehschwingungsdämpfers aus Fig. 2 und
- Fig. 8: eine Seitenansicht des Drehschwingungsdämpfers aus Fig. 2 mit einer Schnittansicht der Hybridtrennkupplung, wobei von den übrigen Bauteilen des Drehschwingungsdämpfers im Wesentlichen nur eine Außenkontur dargestellt ist.

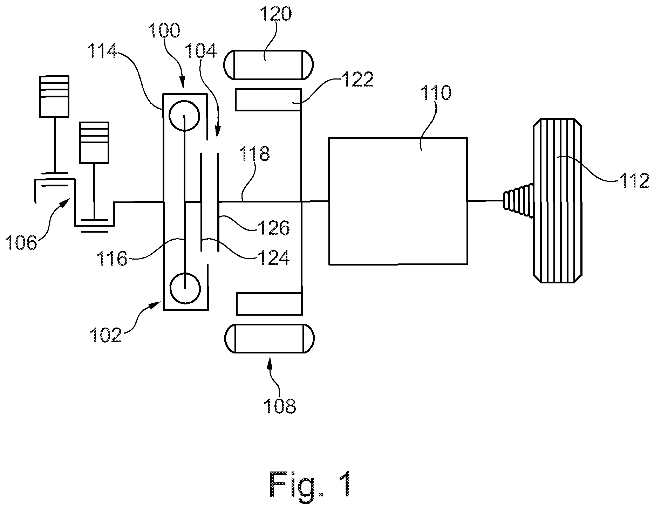

Fig. 1 zeigt einen Antriebsstrang 100 eines Kraftfahrzeugs mit einem parallelen Vollhybridantrieb und einem in dem Antriebsstrang 100 angeordneten Drehschwingungsdämpfer 102 mit einer Kupplung bzw. Kupplungseinrichtung 104 mit Betätigungseinrichtung. Der Antriebsstrang 100 weist eine Brennkraftmaschine 106, den Drehschwingungsdämpfer 102 mit Kupplung 104 und Betätigungseinrichtung, eine elektrische Maschine 108, ein Getriebe 110 und wenigstens ein antreibbares Rad 112 auf. Der Drehschwingungsdämpfer 102 weist ein Eingangsteil 114, ein Ausgangsteil 116 und eine Ausgangswelle 118 oder eine Nabe geeignet zur drehfesten Aufnahme einer Welle, wie Ausgangswelle 118 oder Getriebeeingangswelle, auf. Die elektrische Maschine 108 weist einen Stator 120 und einen Rotor 122 auf. Die elektrische Maschine 108 ist als Motor und/oder als Generator betreibbar.

Der Drehschwingungsdämpfer 102 mit Kupplung 104, Betätigungseinrichtung und Ausgangswelle 118 ist zwischen der Brennkraftmaschine 106 einerseits und der elektrischen Maschine 108 sowie dem Getriebe 110 andererseits angeordnet. Zwischen der Ausgangswelle 118 und dem Getriebe 110 kann ein Anfahrelement, wie Reibungskupplung oder hydrodynamischer Wandler, angeordnet sein.

Die Kupplung 104 ist in dem Antriebsstrang 100 zwischen dem Ausgangsteil 116 des Drehschwingungsdämpfers 102 und der Ausgangswelle 118 angeordnet. Die Kupplung 104 weist auf einer Eingangsseite ein Kupplungseingangsteil 124 und auf einer Ausgangsseite ein Kupplungsausgangsteil 126 auf. Das Kupplungseingangsteil 124 ist mit dem Ausgangsteil 116 des Drehschwingungsdämpfers 102 verbunden. Das Kupplungsausgangsteil 126 ist mit der Ausgangswelle 118 verbunden. Der Rotor 122 der elektrischen Maschine 108 ist mit der Ausgangswelle 118 verbunden. Der Drehschwingungsdämpfer 102 kann beispielsweise als nachfolgend beschriebener, erfindungsgemäßer Drehschwingungsdämpfer 200 ausgeführt sein.

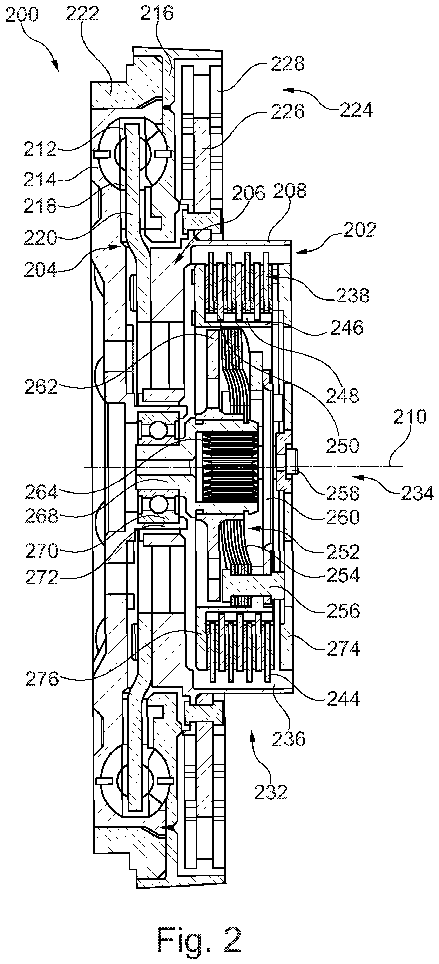

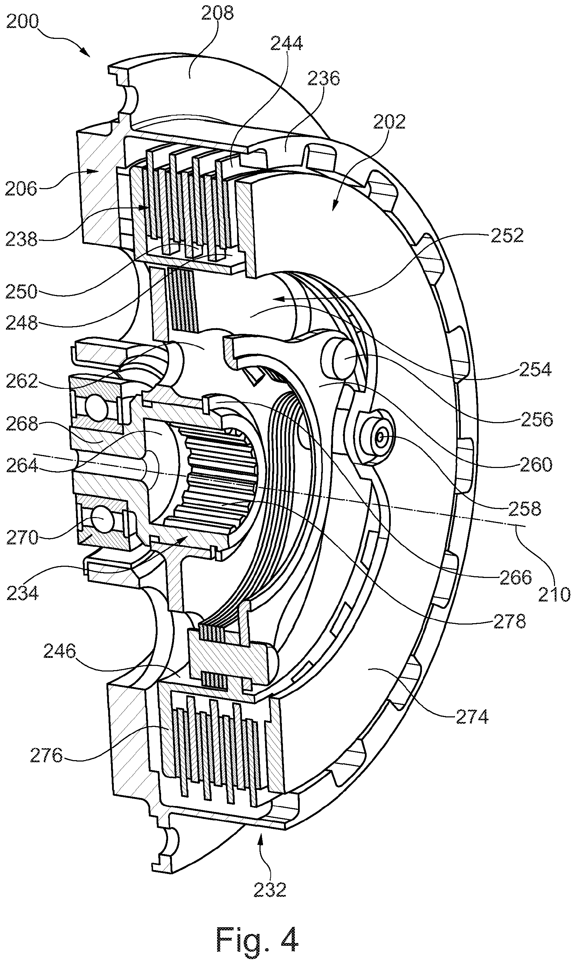

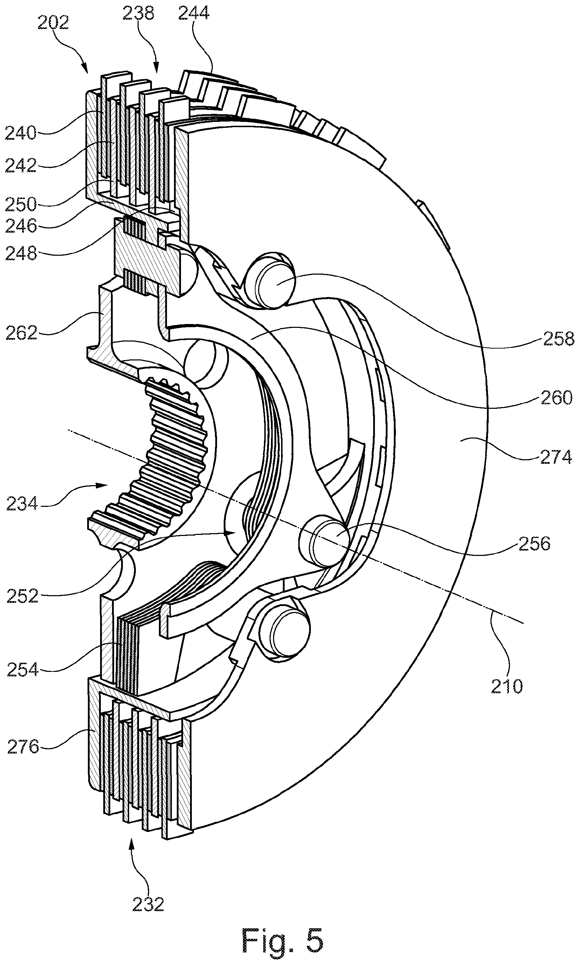

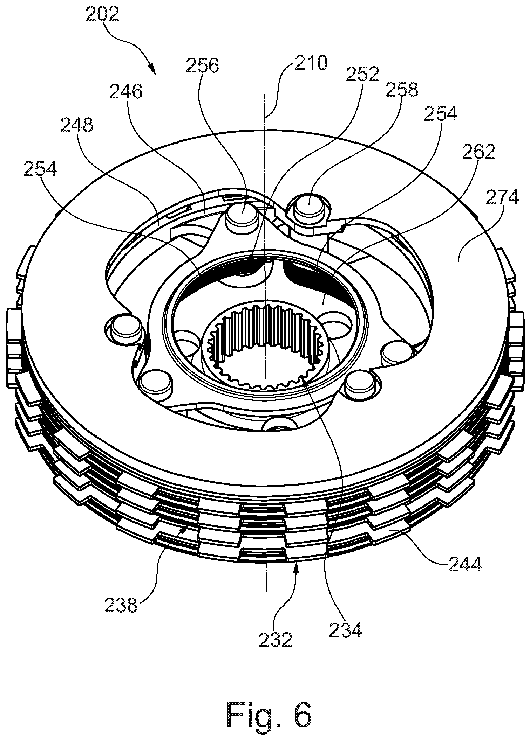

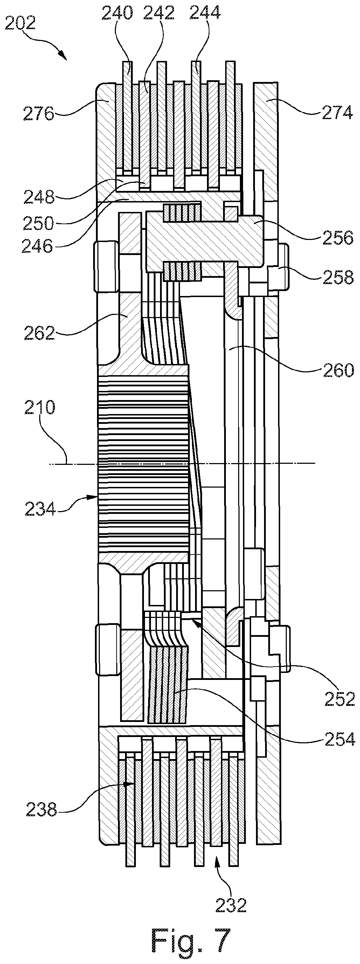

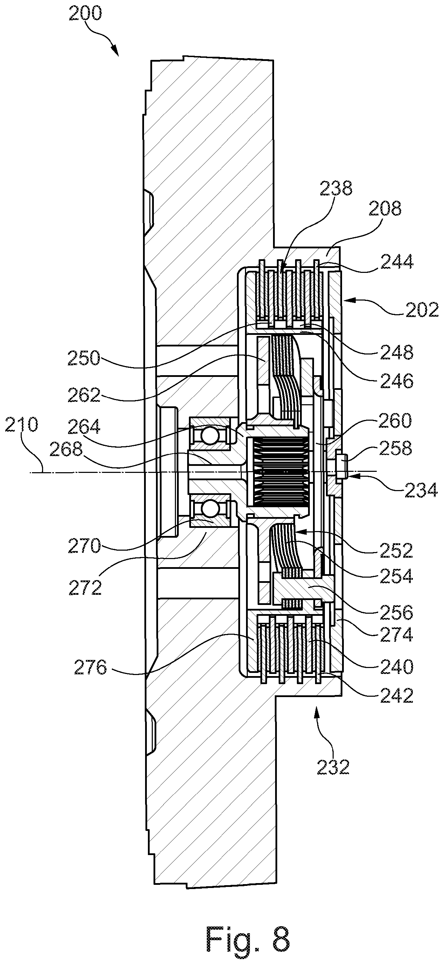

Die Figuren 2 bis 8 zeigen ein bevorzugtes Ausführungsbeispiel des erfindungsgemäßen Drehschwingungsdämpfers 200 für einen Antriebsstrang eines Hybridfahrzeugs. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele des Drehschwingungsdämpfers 200 für einen Antriebsstrang eines Hybridfahrzeugs und einen Antriebsstrang für ein Hybridfahrzeug, die Teilkombinationen der im Folgenden zu erläuternden Merkmale aufweisen. Im Übrigen wird ergänzend auf Fig. 1 und die zugehörige Beschreibung verwiesen. Der Drehschwingungsdämpfers 200 ist in einem in Fig. 1 dargestellten Antriebsstrang 100 in der zuvor beschriebenen Weise einsetzbar.

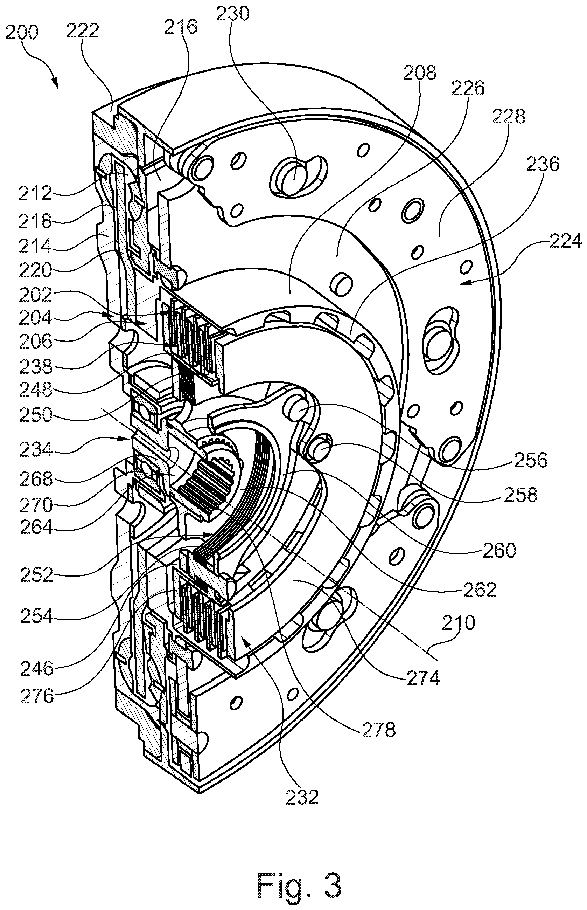

In Fig. 2 und Fig. 3 ist in einer Detailansicht ein Schnitt durch einen als Zweimassenschwungrad ausgeführten Drehschwingungsdämpfers 200 mit einer Hybridtrennkupplung bzw. Kupplungseinrichtung 202 (K0-Kupplung) zum An- und Abkoppeln einer in Fig. 1 dargestellten Brennkraftmaschine an eine in Fig. 1 dargestellte Elektromaschine bzw. elektrische Maschine eines hybriden Antriebsstrangs gezeigt. Der Drehschwingungsdämpfer 200 weist eine Primärmasse bzw. Eingangsteil 204 und eine Sekundärmasse bzw. Ausgangsteil 206 auf. Die Hybridtrennkupplung 202 ist Bestandteil des Ausgangsteils 206, d. h. der abtriebsseitigen Sekundärmasse des Drehschwingungsdämpfers 200, wobei die Hybridtrennkupplung 202 in das Ausgangsteil 206 des Drehschwingungsdämpfers 200 integriert ist. Dabei ist die Hybridtrennkupplung 202 vorzugsweise in einen als topfartigen Abschnitt ausgebildeten Abtriebsflansch 208 des Ausgangsteils 206 integriert.

Der Drehschwingungsdämpfer 200 weist eine Drehachse 210 auf, um die das Eingangsteil 204 und das Ausgangsteil 206 gemeinsam drehbar und relativ zueinander begrenzt verdrehbar sind. Das Eingangsteil 204 und das Ausgangsteil 206 sind aneinander unter Zwischenlage einer Lagerbuchse verdrehbar gelagert. Das Ausgangsteil 206 ist an das Eingangsteil 204 mittels vorzugsweise als Druckfedern, insbesondere als Bogenfedern, ausgebildeter Dämpfungselemente bzw. Energiespeicher 212 in Umfangsrichtung des Drehschwingungsdämpfers 200 begrenzt elastisch angebunden. Das Eingangsteil 204 weist einen Flanschabschnitt 214 und einen Deckelabschnitt 216 auf. Der Flanschabschnitt 214 und der Deckelabschnitt 216 bilden einen toroidförmigen bzw. abschnittsweise toroidförmigen Kanal bzw. Aufnahmeraum 218 zur Aufnahme der Energiespeicher 212, die in Umfangsrichtung voneinander beabstandet sind, und die jeweils zumindest ein Ende aufweisen, das sich jeweils in Anlage mit Anlagebereichen eines Flanschteils 220 befindet bzw. in Anlage mit diesem Flanschteil 220 bringbar ist. Das Flanschteil 220 ist drehfest mit dem Abtriebsflansch 208 verbunden. Vorzugsweise sind die Dämpfungselemente gleitbeweglich in Gleitschalen gelagert, die im toroidförmigen Kanal 218 auf der Primärseite des Drehschwingungsdämpfers 200 angeordnet sind. Am Außenumfang des Eingangsteils 204 ist ein Starterritzel 222 drehfest mit dem Eingangsteil 204 des Drehschwingungsdämpfers 200 verbunden.

Der Drehschwingungsdämpfer 200 weist eine Fliehkraftpendeleinrichtung 224 auf. Die Fliehkraftpendeleinrichtung 224 umfasst ein Pendelmasseträgerteil 226 und mehrere Pendelmassen 228, die mittels Pendelrollen 230 entlang einer Pendelbahn verlagerbar angeordnet sind. Unter Fliehkraftwirkung verlagern sich die Pendelmassen 228 in eine Betriebsstellung, in der die Pendelmassen 228 ausgehend von einer Mittellage entlang der Pendelbahn zwischen zwei Endlagen schwingen, um Drehschwingungen zu tilgen. Das Pendelmasseträgerteil 226 ist an einem Befestigungsflansch des Abtriebsflanschs 208 mit dem Abtriebsflansch 208 des Ausgangsteils 206 verbunden, vorliegend vernietet. Die Hybridtrennkupplung 202 ist in radialer Richtung innerhalb der Fliehkraftpendeleinrichtung 224 angeordnet. Die Hybridtrennkupplung 202 ist radial innerhalb des Abtriebsflanschs 208 angeordnet. Die Fliehkraftpendeleinrichtung 224 ist radial außerhalb des Abtriebsflanschs 208 angeordnet. In axialer Richtung überlappen sich die Fliehkraftpendeleinrichtung 224 und die Hybridtrennkupplung 202.

Die im Abtriebsflansch 208 integrierte Hybridtrennkupplung 202 ist als trockene Lamellenkupplung ausgebildet. Die Hybridtrennkupplung 202 umfasst eine Eingangsseite 232 und eine Ausgangsseite 234. Die Eingangsseite 232 und die Ausgangsseite 234 sind drehbar um die Drehachse 210 gelagert. Der Abtriebsflansch 208 des Ausgangsteils 206 ist Teil der Eingangsseite 232 der Hybridtrennkupplung 202 und weist eine Innenverzahnung 236 auf. Die Innenverzahnung 236 des Abtriebsflanschs 208 verläuft in axialer Richtung und kann somit in Umfangsrichtung Drehmomente übertragen. Der Abtriebsflansch 208 dient als ein Außenkorb der Hybridtrennkupplung 202. Über den Abtriebsflansch 208 wird ein Drehmoment kommend von einem in den Fig. 2 bis 8 nicht dargestellten Verbrennungsmotor in die Hybridtrennkupplung 202 eingeleitet. Radial innenliegend zu der Innenverzahnung 236 ist ein Lamellenpaket 238 angeordnet. Das Lamellenpaket 238 umfasst mehrere als erste Reiblamellen ausgebildete erste Reibpartner 240 und mehrere als zweite Reiblamellen, vorzugsweise Stahllamellen, ausgebildete zweiten Reibpartner 242. Die ersten Reiblamellen 240 weisen eine Außenverzahnung 244 auf, die in die Innenverzahnung 236 des Abtriebsflanschs 208 eingreifen. Dadurch sind die ersten Reiblamellen 240 drehmomentschlüssig mit dem Abtriebsflansch 208 des Drehschwingungsdämpfers 200 verbunden.

Radial innenliegend zum Abtriebsflansch 208 ist ein Innenkorb 246 angeordnet. Der Innenkorb 246 weist im Bereich des Lamellenpakets 238 einen weitgehend zylindrischen Abschnitt mit einer Außenverzahnung 248 auf. Die Außenverzahnung 248 des Innenkorbs 246 verläuft in axialer Richtung und kann somit in Umfangsrichtung Drehmomente übertragen. Die zweiten Reiblamellen 242 weisen eine Innenverzahnung 250 auf, die in die Außenverzahnung 248 des Innenkorbs 246 eingreift. Somit sind die zweiten Reiblamellen 242 drehmomentschlüssig mit dem zweiten Innenkorb 246 verbunden.

Die Hybridtrennkupplung 202 umfasst ferner eine Federanordnung 252. Die Federanordnung 252 ist als Blattfederanordnung ausgebildet und umfasst vorliegend drei Blattfederpakete 254. Jedes der drei Blattfederpakete ist um die Drehachse 210 gekrümmt. Jedes der drei Blattfederpakete 254 weist mindestens eine Blattfeder, vorliegend mehrere Federlagen aus einzelnen Blattfedern auf. Die Federlagen sind dabei geschichtet übereinander angeordnet. Die Federlagen liegen flächig aneinander an. Die Oberseiten und die Unterseiten der Blattfederpakete 254 verlaufen näherungsweise in einer senkrecht zur Drehachse 210 ausgerichteten Ebene, wobei jedoch jedes Blattfederpaket 254 zu dieser Ebene einen spitzen Aufstellwinkel aufweist, so dass die Erstreckung eines Blattfederpakets 254 in axialer Richtung größer ist als die Summe der Materialstärken der einzelnen Federlagen. Jedes Blattfederpaket 254 weist in seinen beiden Endbereichen jeweils ein Durchgangsloch auf, wobei jeweils eines der beiden Durchgangslöcher für die Aufnahme eines Niets 256 und das andere Durchgangsloch für die Aufnahme eines Stufenbolzens 258 ausgebildet ist.

Die Federanordnung 252 beaufschlagt den Innenkorb 246 in axialer Richtung mit einer Federkraft. Die Federanordnung 252 ist an dem Innenkorb befestigt. Dazu weist der Innenkorb 246 drei gleichmäßig über den Umfang verteilte Befestigungslaschen auf, die nach radial innen von dem weitgehend zylindrischen Abschnitt des Innenkorbs abstehen. Jeweils ein Ende eines jeden der drei Blattfederpakete 254 ist mittels eines Niets 256 mit einem der Befestigungslaschen verbunden. Mittels der Niete 256 ist zudem ein Drucktopf 260 mit dem Innenkorb 246 verbunden. Der Drucktopf 260 dient dem Ausrücken der Hybridtrennkupplung 202. In einem ausgerückten, das heißt getrennten Zustand der Hybridtrennkupplung 202 können sich die ersten Reiblamellen 240 frei gegenüber den zweiten Reiblamellen 242 drehen.

Die jeweils von dem zugeordneten Niet 256 abgewandten Enden eines jeden Blattfederpakets 254 sind mittels jeweils eines Stufenbolzens 258 mit einem Kupplungsträger 262 fest verbunden. Der Kupplungsträger 262 umfasst einen ringscheibenförmigen Abschnitt und eine innenverzahnten zylindrischen Abschnitt, der mit der Drehachse 210 fluchtet. Der ringscheibenförmige Abschnitt steht radial nach außen von dem innenverzahnten zylindrischen Abschnitt ab. Die Stufenbolzen 258 sind mit dem ringscheibenförmigen Abschnitt des Kupplungsträgers 262 verbunden, vorliegend vernietet. Der Kupplungsträger 262 ist radial innerhalb des zylindrischen Abschnitts des Innenkorbs angeordnet.

Ein Nabenteil 264 ist fluchtend mit der Drehachse 210 fest mit dem Kupplungsträger 262 verbunden. Das Nabenteil 264 ist Bestandteil der Ausgangsseite 234 der Hybridtrennkupplung 202. Das Nabenteil 264 weist eine Außenverzahnung auf, auf die der innenverzahnte zylindrische Abschnitt des Kupplungsträgers 262 vollständig aufgeschoben ist. In Richtung des Eingangsteils 204 liegt der Kupplungsträger 262 an einer Stufe des Nabenteils 264 an. In entgegengesetzter Richtung ist der Kupplungsträger 262 mittels eines Sicherungsrings 266 in axialer Richtung relativ zum Nabenteil fixiert. Das Nabenteil 264 weist einen Lagerzapfen 268 auf, der einen Innenring eines Wälzlagers 270 trägt. Der Außenring des Wälzlagers 270 ist in einen umlaufenden zylindrischen Kragen 272 des Eingangsteils 204 eingepresst. Das Nabenteil 264 ist drehbar im Eingangsteil 204 gelagert. Dadurch ist der Kupplungsträger 262 mittels des Nabenteils 264 drehbar, und zum Eingangsteil 204 axial fixiert, gelagert. Die Federanordnung 252 ist radial zwischen dem Nabenteil 264 und dem Lamellenpaket 238 angeordnet.

Eine weitgehend ringscheibenförmige Anpressplatte 274 ist axial benachbart zu dem Lamellenpaket 238 angeordnet. Die Anpressplatte 274 ist neben einer von dem Eingangsteil 204 abgewandten Seite des Lamellenpakets 238 angeordnet und mittels der Stufenbolzen 258 an dem Kupplungsträger 262 fixiert. Benachbart zu einer dem Eingangsteil 204 zugewandten Seite des Lamellenpakets 238 ist eine Druckplatte 276 angeordnet. Die Druckplatte 276 ist mit dem Innenkorb 246 verbunden, vorliegend einteilig mit diesem ausgeführt. Die Druckplatte 276 ist ringscheibenförmig und steht in radialer Richtung von dem weitgehend zylindrischen Abschnitt des Innenkorbs 246 ab. Das Lamellenpaket 238 ist somit zwischen der Anpressplatte 274 und der Druckplatte 276 angeordnet. Die Federanordnung 252 führt den Innenkorb 246 axial beweglich und spannt die Druckplatte 276 in Richtung des Lammelenpakets 238 vor, so dass in einem eingerückten Zustand der Hybridtrennkupplung 202 das Lamellenpaket 238 zwischen der Druckplatte 276 und der Anpressplatte 274 eingespannt ist und ein Drehmoment übertragen kann. Aus einer Drehbewegung des Ausgangsteils 206 des Drehschwingungsdämpfers 200 resultiert entsprechend eine Drehbewegung des Nabenteils 264. Eine Ausgangswelle, die zwischen der Brennkraftmaschine einerseits und der elektrischen Maschine sowie dem Getriebe andererseits angeordnet ist, ist mit dem Nabenteil 264 drehfest verbunden. Dazu weist das Nabenteil 264 eine Innenverzahnung 278 auf, die eine Außenverzahnung der Ausgangswelle drehfest aufnimmt.

Mit der Hybridtrennkupplung 202 lässt sich in einem hybriden Antriebsstrang eine Brennkraftmaschine vom restlichen Antriebsstrang, insbesondere von einer elektrischen Maschine, ankoppeln und abkoppeln. In einem unbetätigten Zustand der Hybridtrennkupplung 202 ist die Brennkraftmaschine angekoppelt. Zum Abkoppeln der Brennkraftmaschine, das heißt zum Ausrücken der Hybridtrennkupplung 202, wird der Drucktopf 260 mit einer Ausrückkraft beaufschlagt, so dass der Innenkorb 246 unter weiterer Vorspannung der Blattfederpakete 254 von zu der Anpressplatte 274 axial weg verschoben wird, so dass das Lamellenpaket 238 nicht mehr zwischen der Druckplatte 276 und der Anpressplatte 274 eingespannt ist und die ersten Reiblamellen 240 relativ zu den zweiten Reiblamellen 242 frei drehen können. Dadurch ist das Nabenteil 264 von der Brennkraftmaschine abgekoppelt.

Zum Starten der Brennkraftmaschine kann ein konventioneller Starter bzw. ein Riemenstarter vorgesehen sein. In einer Abwandlung des Ausführungsbeispiels erfolgt ein Starten durch die elektrische Maschine. Nach dem Start der Brennkraftmaschine werden die Drehzahlen der elektrischen Maschine und der Brennkraftmaschine vorzugsweise synchronisiert und anschließend die Hybridtrennkupplung 202 geschlossen. Im Zugbetrieb muss die Hybridtrennkupplung 202 das von der Brennkraftmaschine erzeugte Moment sicher übertragen können, im Schubbetrieb ist lediglich die Übertragung des Brennkraftmaschinenschleppmoments (Motorbremse) erforderlich. Dadurch, dass die Blattfederpakete 254 einen Aufstellwinkel aufweisen, wird das von der Hybridtrennkupplung 202 übertragbare Moment im Zugbetrieb verstärkt. Die Verstärkungskraft wird dabei intern zwischen der Anpressplatte 274 und dem Innenkorb 246 abgestützt. Im Schubbetrieb wird das übertragbare Moment etwas reduziert.

### Bezugszeichenliste

- 100: Antriebsstrang
- 102: Drehschwingungsdämpfer
- 104: Kupplung
- 106: Brennkraftmaschine
- 108: elektrische Maschine
- 110: Getriebe
- 112: antreibbares Rad
- 114: Eingangsteil
- 116: Ausgangsteil
- 118: Ausgangswelle
- 120: Stator
- 122: Rotor
- 124: Kupplungseingangsteil
- 126: Kupplungsausgangsteil

- 200: Drehschwingungsdämpfer
- 202: Hybridtrennkupplung, Kupplungseinrichtung
- 204: Primärmasse, Eingangsteil
- 206: Sekundärmasse, Ausgangsteil
- 208: Abtriebsflansch, topfartigen Abschnitt
- 210: Drehachse
- 212: Energiespeicher, Bogenfeder
- 214: Flanschabschnitt
- 216: Deckelabschnitt
- 218: Kanal, Aufnahmeraum
- 220: Flanschteil
- 222: Starterritzel
- 224: Fliehkraftpendeleinrichtung
- 226: Pendelmasseträgerteil
- 228: Pendelmasse
- 230: Pendelrolle
- 232: Eingangsseite
- 234: Ausgangsseite
- 236: Innenverzahnung (des Abtriebsflansches 208)
- 238: Lamellenpaket
- 240: erster Reibpartner, erste Reiblamelle
- 242: zweiter Reibpartner, zweite Reiblamelle
- 244: Außenverzahnung (der ersten Reiblamellen 240)
- 246: Innenkorb
- 248: Außenverzahnung (des Innenkorbs 246)
- 250: Innenverzahnung (der zweiten Reiblamellen 242)
- 252: Federanordnung
- 254: Blattfederpaket
- 256: Niet
- 258: Stufenbolzen
- 260: Drucktopf
- 262: Kupplungsträger
- 264: Nabenteil
- 266: Sicherungsring
- 268: Lagerzapfen
- 270: Wälzlager
- 272: Kragen
- 274: Anpressplatte
- 276: Druckplatte
- 278: Innenverzahnung (des Nabenteils 264)

## Patentansprüche

1. Hybrid-Antriebsstrang (100) mit einer Brennkraftmaschine (106), einer elektrischen Maschine (108) und einem Drehschwingungsdämpfer (200), wobei der Drehschwingungsdämpfer (200) aufweist:
ein Eingangsteil (204) und ein Ausgangsteil (206) mit einer gemeinsamen Drehachse (210), um die das Eingangsteil (204) und das Ausgangsteil (206) zusammen drehbar und relativ zueinander begrenzt verdrehbar sind, und
eine zwischen dem Eingangsteil (204) und dem Ausgangsteil (206) wirksame Feder-Dämpfer-Einrichtung (212), wobei
das Ausgangsteil (206) eine zwischen einer offenen Betätigungsstellung und einer geschlossenen Betätigungsstellung verstellbare Kupplungseinrichtung (202) mit einer Eingangsseite (232) und einer Ausgangsseite (234) aufweist,
die Kupplungseinrichtung (202) in der geschlossenen Betätigungsstellung ein Drehmoment von der Eingangsseite (232) auf die Ausgangsseite (234) überträgt,
ein Rotor (122) der elektrischen Maschine (108) mittels einer Ausgangswelle (118) mit dem Drehschwingungsdämpfer (200) verbunden ist, und **dadurch gekennzeichnet, dass**
die Ausgangsseite (234) der Kupplungseinrichtung (202) eine Federanordnung (252) aufweist, die in der geschlossenen Betätigungsstellung der Kupplungseinrichtung (202) das Drehmoment von einem ersten Bauteil (246) der Ausgangsseite (234) auf ein zweites Bauteil (262) der Ausgangsseite (234) überträgt.

2. Hybrid-Antriebsstrang (100) nach Anspruch 1, **dadurch gekennzeichnet, dass** die Kupplungseinrichtung (202) eine Lamellenkupplung, insbesondere eine trockene Lamellenkupplung ist, und insbesondere ein Lamellenpaket (238) mit ersten Reiblamellen (240) und zweiten Reiblamellen (242) aufweist.

3. Hybrid-Antriebsstrang (100) nach Anspruch 1 oder 2, **dadurch gekennzeichnet, dass** in der geschlossenen Betätigungsstellung der Kupplungseinrichtung (202) die Federanordnung (252) wenigstens mittelbar ein Lamellenpaket (238) der Kupplungseinrichtung (202) derart spannt, dass mittels des Lamellenpakets (238) das Drehmoment von der Eingangsseite (232) auf die Ausgangsseite (234) übertragbar ist.

4. Hybrid-Antriebsstrang (100) nach einem der Ansprüche 1 bis 3, **dadurch gekennzeichnet, dass** ein Außenkorb der Kupplungseinrichtung (202) in einen Abtriebsflansch (208) des Ausgangsteils (206) integriert ist.

5. Hybrid-Antriebsstrang (100) nach einem der Ansprüche 1 bis 4, **dadurch gekennzeichnet, dass** ein Innenkorb (246) der Kupplungseinrichtung (202) in axialer Richtung begrenzt verlagerbar und mittels der Federanordnung (252) drehfest mit einem Kupplungsträger (262) verbunden ist.

6. Hybrid-Antriebsstrang (100) nach einem der Ansprüche 1 bis 5, **dadurch gekennzeichnet, dass** die Federanordnung (252) wenigstens ein Blattfederpaket (254) mit wenigstens einer Blattfeder aufweist, die insbesondere einen Aufstellwinkel aufweist.

7. Hybrid-Antriebsstrang (100) nach weeinem der Ansprüche 1 bis 6, **dadurch gekennzeichnet, dass** die Kupplungseinrichtung (202) mittels eines Drucktopfes (260) in die offene Betätigungsstellung ausrückbar ist.

8. Hybrid-Antriebsstrang (100) nach einem der Ansprüche 1 bis 7, **dadurch gekennzeichnet, dass** der Drehschwingungsdämpfer (200) eine Fliehkraftpendeleinrichtung (224) aufweist.

## Claims

1. Hybrid drive train (100) having an internal combustion engine (106), an electric machine (108) and a torsional vibration damper (200), the torsional vibration damper (200) having:
an input part (204) and an output part (206) with a common rotational axis (210), about which the input part (204) and the output part (206) can be rotated together and can be turned relative to one another to a limited extent, and
a spring/damper device (212) which is active between the input part (204) and the output part (206),
the output part (206) having a clutch device (202) which can be adjusted between an open actuating position and a closed actuating position and has an input side (232) and an output side (234),
the clutch device (202) transmitting a torque from the input side (232) to the output side (234) in the closed actuating position,
a rotor (122) of the electric machine (108) being connected to the torsional vibration damper (200) by means of an output shaft (118), and **characterized in that**
the output side (234) of the clutch device (202) has a spring arrangement (252) which, in the closed actuating position of the clutch device (202), transmits the torque from a first component (246) of the output side (234) to a second component (262) of the output side (234).

2. Hybrid drive train (100) according to Claim 1, **characterized in that** the clutch device (202) has a multiple disc clutch, in particular a dry multiple disc clutch, and, in particular, a multiple disc assembly (238) with first friction discs (240) and second friction discs (242).

3. Hybrid drive train (100) according to Claim 1 or 2, **characterized in that**, in the closed actuating position of the clutch device (202), the spring arrangement (252) at least indirectly stresses a multiple disc assembly (238) of the clutch device (202) in such a way that the torque can be transmitted from the input side (232) to the output side (234) by means of the multiple disc assembly (238).

4. Hybrid drive train (100) according to one of Claims 1 to 3, **characterized in that** an outer basket of the clutch device (202) is integrated into an output flange (208) of the output part (206).

5. Hybrid drive train (100) according to one of Claims 1 to 4, **characterized in that** an inner basket (246) of the clutch device (202) can be moved in the axial direction to a limited extent and is connected fixedly by means of the spring arrangement (252) to a clutch carrier (262) so as to rotate with it.

6. Hybrid drive train (100) according to one of Claims 1 to 5, **characterized in that** the spring arrangement (252) has at least one leaf spring assembly (254) with at least one leaf spring which has, in particular, an installation angle.

7. Hybrid drive train (100) according to one of Claims 1 to 6, **characterized in that** the clutch device (202) can be disengaged into the open actuating position by means of a pressure pot (260).

8. Hybrid drive train (100) according to one of Claims 1 to 7, **characterized in that** the torsional vibration damper (200) has a centrifugal force pendulum device (224) .

## Revendications

1. Groupe motopropulseur hybride (100) comprenant un moteur à combustion interne (106), une machine électrique (108) et un amortisseur de vibrations de torsion (200), l'amortisseur de vibrations de torsion (200) comprenant :
une partie d'entrée (204) et une partie de sortie (206) pourvues d'un axe de rotation commun (210) sur lequel la partie d'entrée (204) et la partie de sortie (206) peuvent tourner conjointement et de manière limitée l'une par rapport à l'autre, et
un dispositif d'amortissement à ressort (212) agissant entre la partie d'entrée (204) et la partie de sortie (206),
la partie de sortie (206) comportant un dispositif d'accouplement (202) réglable entre une position d'actionnement ouverte et une position d'actionnement fermée et pourvu d'un côté entrée (232) et d'un côté sortie (234),
le dispositif d'accouplement (202) transmettant, dans la position d'actionnement fermée, un couple du côté entrée (232) au côté sortie (234),
un rotor (122) de la machine électrique (108) étant relié à l'amortisseur de vibrations de torsion (200) à l'aide d'un arbre de sortie (118), et **caractérisé en ce que**
le côté sortie (234) du dispositif d'accouplement (202) comporte un ensemble de ressorts (252) qui transmet, dans la position d'actionnement fermée du dispositif d'accouplement (202), le couple d'un premier composant (246) du côté sortie (234) à un deuxième composant (262) du côté sortie (234).

2. Groupe motopropulseur hybride (100) selon la revendication 1, **caractérisé en ce que** le dispositif d'accouplement (202) est un embrayage à disques multiples, en particulier un embrayage à sec à disques multiples, et en particulier un ensemble de disques (238) comportant des premiers disques de friction (240) et des deuxièmes disques de friction (242).

3. Groupe motopropulseur hybride (100) selon la revendication 1 ou 2, **caractérisé en ce que**, dans la position d'actionnement fermée du dispositif d'accouplement (202), l'ensemble de ressorts (252) serre au moins indirectement un ensemble de disques (238) du dispositif d'accouplement (202) de telle sorte que le couple puisse être transmis du côté entrée (232) au côté sortie (234) à l'aide de l'ensemble de disques (238) .

4. Groupe motopropulseur hybride (100) selon l'une des revendications 1 à 3, **caractérisé en ce qu'**un panier extérieur du dispositif d'accouplement (202) est intégré dans une bride de sortie (208) de la partie de sortie (206).

5. Groupe motopropulseur hybride (100) selon l'une des revendications 1 à 4, **caractérisé en ce qu'**un panier intérieur (246) du dispositif d'accouplement (202) est déplaçable de manière limitée dans la direction axiale et est relié solidairement en rotation à un support d'accouplement (262) à l'aide de l'ensemble de ressorts (252).

6. Groupe motopropulseur hybride (100) selon l'une des revendications 1 à 5, **caractérisé en ce que** l'ensemble de ressorts (252) comprend au moins un ensemble de ressorts à lame (254) comportant au moins un ressort à lame qui présente notamment un angle d'inclinaison.

7. Groupe motopropulseur hybride (100) selon l'une des revendications 1 à 6, **caractérisé en ce que** le dispositif d'accouplement (202) peut être désengagé en position de fonctionnement ouverte à l'aide d'un pot de pression (260).

8. Groupe motopropulseur hybride (100) selon l'une des revendications 1 à 7, **caractérisé en ce que** l'amortisseur de vibrations de torsion (200) comprend un dispositif pendulaire centrifuge (224).
